# EUROPEAN PATENT APPLICATION

(11) **EP 4 850 995 A1**
(43) Date of publication of application: **09.12.2026**
(21) Application number: 26181707.6
(22) Date of filing: 28.05.2026
(51) Int. Cl.: B60T 8/17, B60L 7/26, B60L 15/20, B60T 1/04, B60T 1/10, B60T 8/32, B60T 8/172, B60T 13/58, B60T 13/66, B60T 17/22, B61H 1/00, B61H 13/00

(54) **RAILWAY VEHICLE BRAKE CONTROL DEVICE, RAILWAY VEHICLE BRAKE CONTROL METHOD AND RAILWAY VEHICLE BRAKE CONTROL PROGRAM**

(30) Priority: 03.06.2025 JP 2025092407
(71) Applicant: NABTESCO CORPORATION, Chiyoda-ku Tokyo 102-0093 (JP)
(72) Inventor: Watanabe, Keisuke, Chiyoda-ku, Tokyo, 102-0093 (JP)
(74) Representative: Grünecker Patent- und Rechtsanwälte PartG mbB

(57) **Abstract**

Provided is brake control technology that can effectively prevent wheel treads of railway vehicles from developing a mirror-like finish. A brake control device (50) includes: a command obtaining unit (52) configured to obtain a brake command; a control unit (54) configured to perform brake control of at least one of the tread brake (16) or the electric brake (18) such that a braking force indicated by the brake command is generated; a wheel skid information obtaining unit (58) configured to obtain wheel skid information indicating a high likelihood of wheel skid if the wheel (12) of the railway vehicle (1) is likely to skid; and a determining unit (62) configured to determine whether a predetermined operating condition is satisfied, the predetermined operating condition including a condition that the wheel skid information obtaining unit (58) obtains the wheel skid information. If the determining unit (62) determines that the operating condition is satisfied at a time when the command obtaining unit (52) obtains the brake command, the control unit (54) performs ratio change brake control in which a ratio of a braking force applied by the tread brake (16) is increased.

## Description

### TECHNICAL FIELD

The present invention relates to a railway vehicle brake control device, a railway vehicle brake control method, and a railway vehicle brake control program.

### BACKGROUND

It is known that some railway vehicles include both tread brakes that are configured to produce braking force by pressing a brake shoe against the tread of the wheel and electric brakes such as regenerative brakes (see, for example, Patent Literature 1).

### RELEVANT REFERENCE

### LIST OF RELEVANT PATENT LITERATURE

Patent Literature 1: Japanese Patent No. 7012912

### SUMMARY

In railway vehicles including both tread brakes and electric brakes, the use of electric brakes is recommended for energy conservation and other reasons. On the other hand, as the tread brakes are used less frequently, there are fewer chances to roughen the wheel treads, posing a risk that the wheel treads will develop a mirror-like finish. Patent Literature 1 discloses a technology for suppressing the progress of the mirror-like finish of the wheels by adjusting the cumulative duration during which the brake shoe is pressed against the wheels at a pressure equal to or higher than a predetermined pressure while a brake command is received, such that the cumulative duration becomes equal to or longer than a specified period. However, the technology disclosed in Patent Literature 1 requires complex brake control while a brake command is received.

In view of the above problem, the objective of the present invention is to provide brake control technology that can effectively prevent wheel treads of railway vehicles from developing a mirror-like finish.

To solve the above problem, an aspect of the present invention provides a railway vehicle brake control device for use in a railway vehicle including a tread brake and an electric brake. The railway vehicle brake control device includes: a command obtaining unit configured to obtain a brake command; a control unit configured to perform brake control of at least one of the tread brake or the electric brake such that a braking force indicated by the brake command is generated; a wheel skid information obtaining unit configured to obtain wheel skid information indicating a high likelihood of wheel skid if a wheel of the railway vehicle is likely to skid; and a determining unit configured to determine whether a predetermined operating condition is satisfied, the predetermined operating condition including a condition that the wheel skid information obtaining unit obtains the wheel skid information. If the determining unit determines that the operating condition is satisfied at a time when the command obtaining unit obtains the brake command, the control unit performs ratio change brake control in which a ratio of a braking force applied by the tread brake is increased.

An aspect of the present invention discloses a railway vehicle brake control device for use in a railway vehicle including a tread brake and an electric brake. The railway vehicle brake control device includes: a command obtaining unit configured to obtain a brake command; a control unit configured to perform brake control of at least one of the tread brake or the electric brake such that a braking force indicated by the brake command is generated; a speed information obtaining unit configured to obtain traveling speed information of the railway vehicle; and a determining unit configured to determine whether a predetermined operating condition is satisfied, the predetermined operating condition including a condition that a traveling speed of the railway vehicle is equal to or greater than a predetermined speed. If the determining unit determines that the operating condition is satisfied at a time when the command obtaining unit obtains the brake command, the control unit performs ratio change brake control in which a ratio of a braking force applied by the tread brake is increased.

An aspect of the present invention discloses a railway vehicle brake control method for controlling a computer used in a railway vehicle including a tread brake and an electric brake. The railway vehicle brake control method includes: a command obtaining step of obtaining a brake command; a control step of performing brake control of at least one of the tread brake or the electric brake such that a braking force indicated by the brake command is generated; a wheel skid information obtaining step of obtaining wheel skid information indicating a high likelihood of wheel skid if a wheel of the railway vehicle is likely to skid; and a determining step of determining whether a predetermined operating condition is satisfied, the predetermined operating condition including a condition that the wheel skid information is obtained. The control step is a step of, if the operating condition is determined in the determining step to be satisfied at a time when the brake command is obtained in the command obtaining step, performing ratio change brake control in which a ratio of a braking force applied by the tread brake is increased.

An aspect of the present invention discloses a railway vehicle brake control method for controlling a computer used in a railway vehicle including a tread brake and an electric brake. The railway vehicle brake control method includes: a command obtaining step of obtaining a brake command; a control step of performing brake control of at least one of the tread brake or the electric brake such that a braking force indicated by the brake command is generated; a speed information obtaining step of obtaining traveling speed information of the railway vehicle; and a determining step of determining whether a predetermined operating condition is satisfied, the predetermined operating condition including a condition that a traveling speed of the railway vehicle is equal to or greater than a predetermined speed. The control step is a step of, if the operating condition is determined in the determining step to be satisfied at a time when the brake command is obtained in the command obtaining step, performing ratio change brake control in which a ratio of a braking force applied by the tread brake is increased.

An aspect of the present invention discloses a railway vehicle brake control program to be executed by a computer used in a railway vehicle including a tread brake and an electric brake. The railway vehicle brake control program causes the computer to execute: a command obtaining step of obtaining a brake command; a control step of performing brake control of at least one of the tread brake or the electric brake such that a braking force indicated by the brake command is generated; a wheel skid information obtaining step of obtaining wheel skid information indicating a high likelihood of wheel skid if a wheel of the railway vehicle is likely to skid; and a determining step of determining whether a predetermined operating condition is satisfied, the predetermined operating condition including a condition that the wheel skid information is obtained. The control step is a step of, if the operating condition is determined in the determining step to be satisfied at a time when the brake command is obtained in the command obtaining step, performing ratio change brake control in which a ratio of a braking force applied by the tread brake is increased.

An aspect of the present invention discloses a railway vehicle brake control program to be executed by a computer used in a railway vehicle including a tread brake and an electric brake. The railway vehicle brake control program causes the computer to perform: a command obtaining step of obtaining a brake command; a control step of performing brake control of at least one of the tread brake or the electric brake such that a braking force indicated by the brake command is generated; a speed information obtaining step of obtaining traveling speed information of the railway vehicle; and a determining step of determining whether a predetermined operating condition is satisfied, the predetermined operating condition including a condition that a traveling speed of the railway vehicle is equal to or greater than a predetermined speed. The control step is a step of, if the operating condition is determined in the determining step to be satisfied at a time when the brake command is obtained in the command obtaining step, performing ratio change brake control in which a ratio of a braking force applied by the tread brake is increased.

Note that any arbitrary combination of the foregoing elements, as well as mutual substitutions of the constituent elements or expressions of the present invention among a method, apparatus, program, temporary or non-transitory storage medium, system, etc., are encompassed as aspects of the present invention.

### ADVANTAGEOUS EFFECTS

According to the present invention, brake control technology can be provided that can effectively prevent wheel treads of railway vehicles from developing a mirror-like finish.

### BRIEF DESCRIPTION OF THE DRAWINGS

Fig. 1 is a schematic side view of a railway vehicle to which a brake control device relating to one embodiment is applied.
Fig. 2 is a block diagram showing the railway vehicle with a main focus on the configuration of a brake control device.
Fig. 3 is a flowchart showing a first example of brake control performed by the brake control device.
Fig. 4 is a flowchart showing a second example of brake control performed by the brake control device.
Fig. 5 is a flowchart showing an example of normal brake control performed by the brake control device.

### DESCRIPTION OF THE PREFERRED EMBODIMENTS

The invention will now be described by reference to the preferred embodiments. This does not intend to limit the scope of the present invention, but to exemplify the invention. The embodiments disclosed herein describe a plurality of physically separate constituent parts. They may be combined into a single part, and any one of them may be divided into a plurality of physically separate constituent parts. Irrespective of whether or not the constituent parts are integrated, they are acceptable as long as they are configured to attain the object of the invention.

According to the embodiments disclosed herein, a plurality of functions may be distributively provided. Some or all of these functions may be integrally provided. Conversely, a different plurality of functions may be integrally provided. Some or all of these functions can be distributively provided. Irrespective of whether the functions are integrated or distributed, they are acceptable as long as they are configured to attain the object of the invention.

Separate constituent elements having commonalities are distinguished by prefixing their names with "first," "second," or the like, and such prefixes are omitted when the constituent elements are referred to collectively. Terms including ordinals such as "first" and "second" are used to describe various constituent elements; however, these terms are used only to distinguish one constituent element from another and are not intended to limit the constituent elements.

The present invention is described below with reference to the drawings and based on preferred embodiments. In the embodiments and modification examples, the same or equivalent constituent elements and members shall be assigned with the same reference numbers, and redundant descriptions are omitted where appropriate. The dimensions of the members in the drawings are shown enlarged or reduced as appropriate for ease of understanding. In the drawings, some parts of the members that are not important for describing the embodiments are omitted.

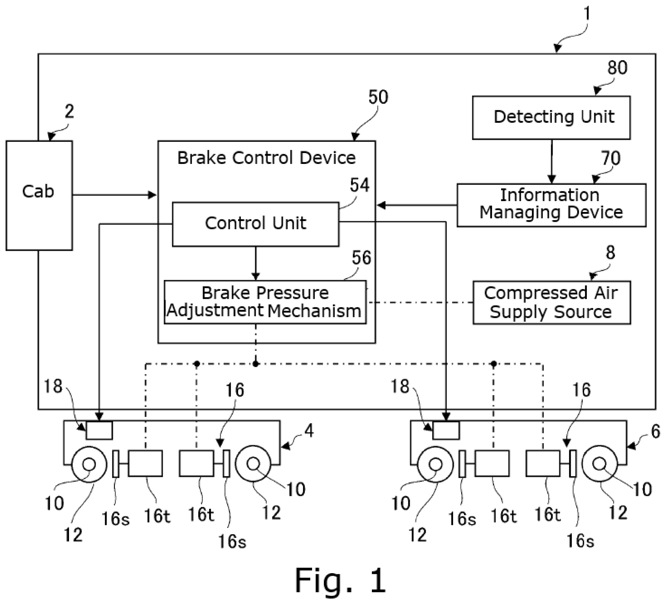

Fig. 1 is a schematic side view of a railway vehicle 1 to which a railway vehicle brake control device relating to one embodiment (hereinafter referred to as "the brake control device 50") is applied. The following first gives an overview of the railway vehicle 1.

The functional blocks in Fig. 1 and the subsequent block diagrams may be realized by electronic elements, electronic circuits and mechanical parts such as CPUs and memories of computers in terms of hardware, and can be realized by computer programs or the like in terms of software. The functional blocks shown in the drawings are, however, realized by cooperative operation between hardware and software. Therefore, it is understood by those skilled in the art that these functional blocks can be realized in various forms by combining hardware and software.

As shown in Fig. 1, the railway vehicle 1 includes a cab 2, a first bogie 4, a second bogie 6, tread brakes 16, electric brakes 18, a compressed air supply source 8, a brake control device 50, an information managing device 70 and a detecting unit 80. The cab 2 is provided on the frontward side of the vehicle body in the travel direction. The first bogie 4 is positioned toward the front on the underside of the vehicle body. The second bogie 6 is positioned toward the rear on the underside of the vehicle body.

The first and second bogies 4 and 6 each have two axles 10 spaced apart in the front-rear direction of the railway vehicle 1. Each axle 10 has wheels 12 mounted on its opposite ends. The tread brakes 16 are provided on the first and second bogies 4 and 6, and connected to one end of the flow channel shown by the dash-dot line in Fig. 1. In the shown example, four tread brakes 16 are shown, two on the first bogie 4 and two on the second bogie 6. The tread brakes 16 operate in response to the pressure of compressed air supplied through the flow channel (hereinafter, referred to as " the brake pressure"). The tread brakes 16 each have a brake shoe 16s configured to apply a braking force to the corresponding wheel 12, and a brake cylinder 16t configured to drive the brake shoe 16s.

The brake cylinder 16t is connected to one end of the flow channel. The brake pressure increases as the compressed air is supplied through the flow channel, which operates the brake cylinder 16t. As the brake cylinder 16t operates, the brake shoe 16s is pressed against the tread of the wheel 12, which creates frictional force between the brake shoe 16s and the tread of the wheel 12. In this way, the braking force is applied to the wheel 12.

The compressed air supply source 8 is a tank configured to supply compressed air, and an air pump is used to keep the pressure in the tank within a predetermined range. The compressed air supply source 8 is connected to the other end of the flow channel, i.e., the end opposite the end of the flow channel to which the brake cylinder 16t is connected, and configured as a supply source to supply compressed air through the flow channel. The compressed air supply source 8 is an example of a fluid supply source. The fluid supply source supplies a pressurized fluid, which may be a gas such as air, nitrogen, inert gas, or a liquid such as water or oil. The following description is made using compressed air as the pressurized fluid.

The brake control device 50 has a control unit 54 and a brake pressure adjustment mechanism 56. The control unit 54 performs brake control of at least one of the tread brakes 16 or the electric brakes 18 such that a braking force indicated by a brake command from the cab 2 can be generated. Specifically, the cab 2 includes a lever or other operating unit configured to be operated by the operator, and outputs a brake command that instructs generation of a target braking force corresponding to the operating position of the lever or other operating unit. The control unit 54 then performs brake control such that the total of the braking forces generated by the tread and electric brakes 16 and 18 becomes equal to the target braking force.

The brake pressure adjustment mechanism 56 adjusts the brake pressure supplied to each tread brake 16. The brake pressure adjustment mechanism 56 includes a valve mechanism, such as a control valve. The valve mechanism is, for example, provided in the flow channel between the compressed air supply source 8 and the brake cylinder 16t, and adjusts the amount of the compressed air supplied to the brake cylinder 16t. When performing brake control of each tread brake 16, the control unit 54 controls the brake pressure adjustment mechanism 56.

The electric brakes 18 are brakes that use electric motors (not shown) to generate a braking force and, for example, regenerative brakes. During braking, the electric brakes 18 control the electric motors such that they operate as power generators, so that the kinetic energy is converted into electric energy. In this way, the electric brakes 18 generate braking force. The generated electric energy is fed back to the overhead wires or third rail. When performing brake control of the electric brakes 18, the control unit 54 causes the electric motors to generate electric power.

The information managing device 70 outputs predetermined information to the brake control device 50. The detecting unit 80 includes various sensors and outputs the detected data to the brake control device 50 via the information managing device 70. The information managing device 70 and detecting unit 80 will be described in detail below.

The following now describes the respective functions of the tread and electric brakes 16 and 18 of the railway vehicle 1. As described above, the electric energy generated by the electric brakes 18 in generating the braking force can be reused. Therefore, from the viewpoint of energy conservation and the like, the use of the electric brakes 18 is prioritized. On the other hand, as the tread brakes 16 are used, the brake shoes 16s are pressed against the treads of the wheels 12, which increases the surface roughness of the treads of the wheels 12 (hereinafter also referred to as "roughens the treads of the wheels 12"). This suppresses the development of a mirror-like finish on the treads of the wheels 12, making it possible to prevent a decrease in braking force. However, if the electric brakes 18 are used preferentially and the tread brakes 16 are used less frequently, the treads of the wheels 12 are likely to wear and develop a mirror-like finish due to friction between the treads of the wheels 12 and the rails and other factors. As the mirror-like finish of the treads of the wheels 12 progresses, the adhesive and frictional forces between the treads of the wheels 12 and the rails decrease, which tends to cause problems such as reduced deceleration performance, increased susceptibility to skidding and increased likelihood of flat wheels and the like.

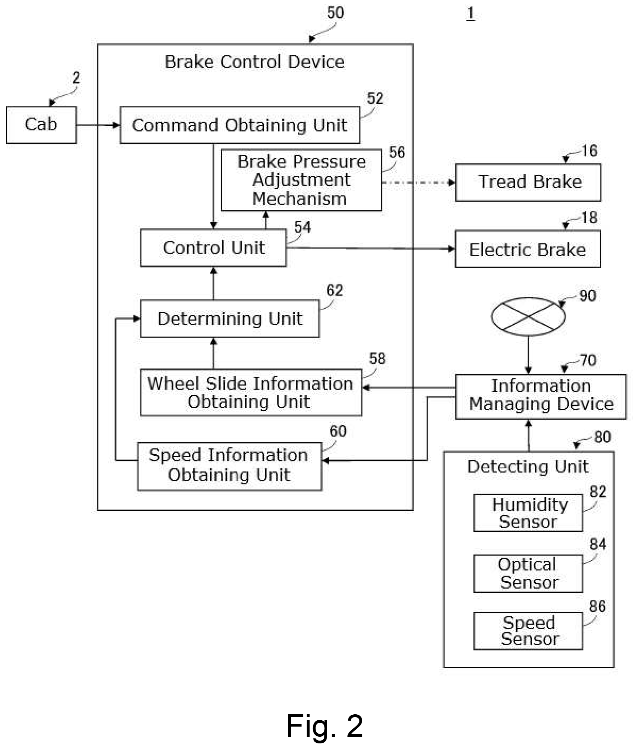

To address this issue, the brake control device 50 relating to the present embodiment is configured such that the electric brakes 18 can be effectively utilized while the progress of a mirror-like finish of the treads of the wheels 12 is effectively prevented. The following now describes in detail the brake control device 50 with reference to Fig. 2.

Fig. 2 is a block diagram showing the railway vehicle 1, with a main focus on the configuration of the brake control device 50. Fig. 2 does not show the first bogie 4, second bogie 6, compressed air supply source 8 and some other constituent elements. In addition to the control unit 54 and brake pressure adjustment mechanism 56 described with reference to Fig. 1, the brake control device 50 includes a command obtaining unit 52, a wheel skid information obtaining unit 58, a speed information obtaining unit 60, and a determining unit 62.

The command obtaining unit 52 obtains a brake command from the cab 2 and outputs the obtained brake command to the control unit 54. The control unit 54 performs brake control of at least one of the tread brakes 16 or the electric brakes 18 such that braking force indicated by the brake command can be generated, as described above.

The wheel skid information obtaining unit 58 obtains wheel skid information indicating a high likelihood of skidding if the wheels 12 of the railway vehicle 1 are likely to skid. In the present embodiment, the wheel skid information obtaining unit 58 obtains the wheel skid information from the information managing device 70. The wheel skid information will be described in detail below.

The speed information obtaining unit 60 obtains traveling speed information of the railway vehicle 1. In the present embodiment, the speed information obtaining unit 60 obtains traveling speed information from the information managing device 70.

The detecting unit 80 includes one or more sensors and obtains detection information detected by the sensors. The detecting unit 80 includes, for example, a humidity sensor 82, an optical sensor 84, and a speed sensor 86. The speed sensor 86 obtains traveling speed information indicating the traveling speed of the railway vehicle 1. The detecting unit 80 may further include other sensors.

The information managing device 70 obtains information related to the railway vehicle 1, which includes the detection information from the detecting unit 80 and any information that can be obtained via a network 90 such as the Internet. The information managing device 70 may be, for example, a communication device installed in the railway vehicle 1 among the devices that constitute a train information management system such as INTEROS (INtegrated Train communication networks for Evolvable Railway Operation System).

The information managing device 70 transmits the obtained information related to the railway vehicle 1 to the brake control device 50 as the wheel skid information and traveling speed information. Specifically, the wheel skid information includes information related to at least one of weather information, lubricator information, and rail information.

The weather information included in the wheel skid information indicates weather conditions that increase the likelihood of skidding of the wheels 12 of the railway vehicle 1, such as rain, snow, and low temperatures. For example, if the weather information indicates rain or snow, water on the treads of the wheels 12 reduces the frictional force between the wheels 12 and the rails, increasing the likelihood of skidding of the wheels 12. If the weather information indicates low temperatures, specifically, that the temperature is below a predetermined temperature such as zero degrees, the wheels 12 are more likely to skid as water droplets on the rails may freeze. The information managing device 70 may obtain the weather information from weather satellites or other sources via the network 90 or based on the detection information from the detecting unit 80. For example, if the humidity detected by the humidity sensor 82 is equal to or greater than a predetermined value or if rain or snow is detected by the optical sensor 84, the information managing device 70 obtains the weather information based on the detection information obtained by the detecting unit 80.

Note that the humidity detected by the humidity sensor 82 may continuously remain at or above the predetermined value during a period from a certain time prior to the start of rain or snow until a certain time following the cessation of the rain or snow. In this case, the information managing device 70 transmits the wheel skid information to the brake control device 50 over the period during which the wheels 12 of the railway vehicle 1 are likely to skid, including the certain periods before and after the rain or snow.

The lubricator information included in the wheel skid information includes at least one of drive information of a lubricator (not shown), or installation position information of the lubricator. The drive information of the lubricator may indicate that the lubricator is driven to apply lubricant to the wheels 12 or rails and be based on, for example, a command signal to the lubricator. When the lubricator is installed on the railway vehicle 1, the lubricator applies lubricant to the wheels 12. When the lubricator is installed on the rails, the lubricator applies lubricant to the rails. The lubricator typically applies lubricant to the wheels 12 or rails when the railway vehicle 1 reaches a site on the rails where it is likely to skid, such as a sharp curve or turnout. Therefore, if the information managing device 70 obtains the drive information of the lubricator, it means that the wheels 12 of the railway vehicle 1 are likely to skid.

The installation position information of the lubricator indicates that the railway vehicle 1 has reached or passed the site where the lubricator is installed, when the lubricator is installed on the rails. Even if the lubricator is not driven, the lubricant previously applied by the lubricator may remain on the rails. Therefore, even if the information managing device 70 obtains no drive information of the lubricator, the wheels 12 of the railway vehicle 1 are still likely to skid provided that the information managing device 70 obtains the installation position information of the lubricator.

The rail information included in the wheel skid information indicates that the railway vehicle 1 will reach a site on the rails where it is likely to skid. The rail information can be obtained, for example, by any sensors included in the detecting unit 80 detecting water droplets on the rails, the wet condition of the rails, information representing the surface roughness of the rails, and objects such as fallen leaves on the rails. The rail information may be geographic information about the rails that is stored in advance by the information managing device 70 or obtained via the network 90 or other means, for example, any information indicating that the rails slope downward, lead into a sharp curve or turnout, etc.

The determining unit 62 determines whether a predetermined operating condition is satisfied. The operating condition can include a condition that the wheel skid information obtaining unit 58 obtains the wheel skid information. The operating condition can also include a condition that the traveling speed of the railway vehicle 1 is equal to or greater than a predetermined speed.

If the determining unit 62 determines that the operating condition is satisfied at the time when the command obtaining unit 52 obtains the brake command, the control unit 54 performs ratio change brake control in which the ratio of the braking force applied by the tread brakes 16 is increased. On the other hand, if the determining unit 62 determines that the operating condition is not satisfied at the time when the command obtaining unit 52 obtains the brake command, the control unit 54 performs normal brake control. In other words, at the time when the command obtaining unit 52 obtains a brake command, the control unit 54 performs the normal brake control if the determining unit 62 determines that the operating condition is not satisfied, and performs the ratio change brake control in which the ratio of the braking force applied by the tread brakes 16 is set higher than in the normal brake control if the determining unit 62 determines that the operating condition is satisfied.

As described above, at the time when the brake command is obtained, the brake control device 50 performs the normal brake control to make effective use of the electric brakes 18 if the predetermined operating condition is not satisfied, and performs the ratio change brake control, which increases the ratio of the braking force applied by the tread brakes 16 relative to the normal brake control, to effectively suppress the progress of a mirror-like finish of the treads of the wheels 12 if the predetermined operating condition is satisfied.

Specifically, when the operating condition includes the condition that the wheel skid information obtaining unit 58 has obtained the wheel skid information, the brake control device 50 performs the ratio change brake control provided that the likelihood of wheel skid is high at the time when the brake command is obtained. For example, if the treads of the wheels 12 are wet due to rain or snow and the wheels 12 are thus likely to skid, the water on the treads of the wheels 12 is likely to evaporate due to the frictional heat generated as the brake shoes 16s are pressed against the wheels 12. This can easily reduce the likelihood of wheel skid. Therefore, the brake control device 50 can effectively prevent the wheel skid and suppress the progress of a mirror-like finish.

Note that if the information managing device 70 transmits the wheel skid information to the brake control device 50 over the period including the certain periods before and after the likelihood of the skidding of the wheels 12 of the railway vehicle 1 is high as described above, the brake control device 50 performs the ratio change brake control as long as the brake command is obtained within the certain periods before and after the likelihood of the wheel skid is high. By doing so, the brake control device 50 can prevent the wheel skid by roughening the treads of the wheels 12 before their likelihood of the wheel skid becomes high. In addition, the brake control device 50 can reliably lower the likelihood of the wheel skid by performing the ratio change brake control also over the certain period after the likelihood of the wheel skid becomes low.

When the operating condition includes the condition that the traveling speed of the railway vehicle 1 is equal to or greater than a predetermined speed, the brake control device 50 performs the ratio change brake control if the railway vehicle 1 is traveling at or above the predetermined speed at the time when the brake command is obtained. When the railway vehicle 1 is traveling at or above the predetermined speed, the use of the tread brakes 16 can particularly effectively roughen the treads of the wheels 12. Therefore, the brake control device 50 can effectively suppress the progress of a mirror-like finish.

The wheel skid information may include information indicating the degree to which the wheels 12 are likely to skid. If the determining unit 62 determines that the operating condition is satisfied at the time when the command obtaining unit 52 obtains the brake command, the control unit 54 may perform the ratio change brake control such that, as the degree to which the skidding of the wheels 12 is likely to occur that is indicated by the wheel skid information increases, the ratio of the braking force applied by the tread brakes 16 increases. In this way, the brake control device 50 can more effectively prevent the wheel skid since the brake control device 50 increases the ratio of the braking force applied by the tread brakes 16 as the degree to which the skidding of the wheels 12 is likely to occur at the time when the brake command is obtained increases.

The information indicating the degree to which the wheel skid is likely to occur may be represented by two or more discrete values or continuous values. For example, if the weather information indicates rain or snow, the degree to which the skidding is likely to occur increases as the rainfall or snowfall increases.

When performing the ratio change brake control, the control unit 54 may perform brake control only with the tread brakes 16 and without the electric brakes 18. In other words, the control unit 54 may set the ratio of the braking force applied by the tread brakes 16 to 100% when performing the ratio change brake control. This allows the brake control device 50 to perform the ratio change brake control simply by performing brake control only with the tread brakes 16, and also to suppress the progress of a mirror-like finish more effectively.

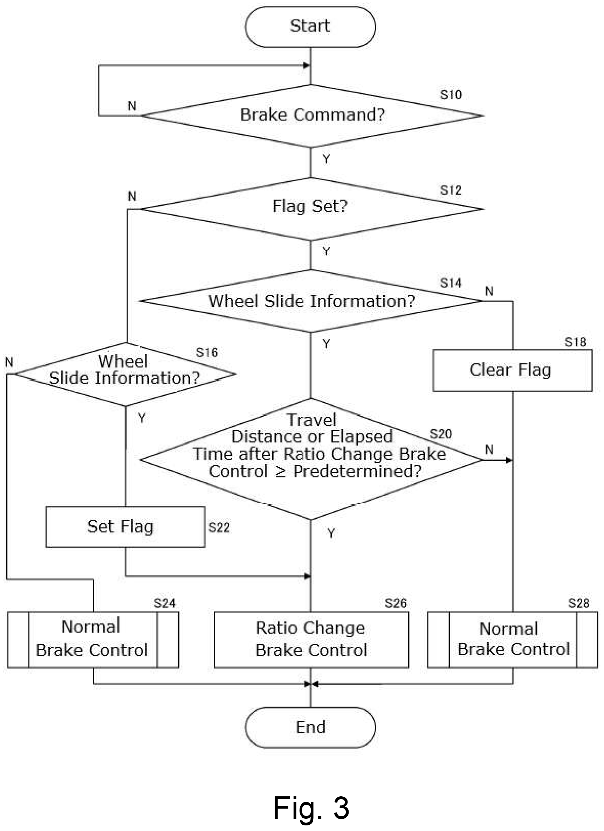

Fig. 3 is a flowchart showing a first example of the brake control performed by the brake control device 50. The process shown in Fig. 3 is performed, for example, while the railway vehicle 1 is traveling.

When obtaining a new brake command from the cab 2 via the command obtaining unit 52 (Y in S10), the brake control device 50 determines whether a flag is set (S12). Here, the flag indicates that wheel skid information is obtained at the time when the last brake command is obtained. For example, the flag is set if it is raining at the time when the last brake command is obtained. If the brake control device 50 determines in the step S12 that the flag is not set (N in S12), the determining unit 62 determines whether the wheel skid information obtaining unit 58 has obtained wheel skid information (S16). If the determining unit 62 determines that no wheel skid information has been obtained (N in S16), the control unit 54 performs normal brake control (S24). If the brake control device 50 determines in the step S12 that the flag is set (Y in S12), the determining unit 62 determines whether the wheel skid information obtaining unit 58 has obtained wheel skid information (S14). If the determining unit 62 determines that no wheel skid information has been obtained (N in S14), the control unit 54 performs normal brake control (S28). Thus, in this example, the brake control device 50 performs the normal brake control if no wheel skid information is obtained at the time when the brake command is obtained.

If the determining unit 62 determines in the step S16 that wheel skid information has been obtained (Y in S16), the brake control device 50 sets the flag (S22). The control unit 54 then performs ratio change brake control (S26). If the determining unit 62 determines in the step S14 that wheel skid information has been obtained (Y in S14), the process proceeds to the step S20. In the step S20, the determining unit 62 determines whether at least one of (i) a condition that the railway vehicle 1 has traveled a predetermined distance or more, or (ii) a condition that a predetermined time or more has elapsed, since the control unit 54 performs the last ratio change brake control (S20). If the determining unit 62 determines that at least one of the conditions is satisfied (Y in S20), the control unit 54 performs ratio change brake control (S26). On the other hand, if the determining unit 62 determines that neither of the conditions is satisfied (N in S20), the control unit 54 performs normal brake control (S28).

As described above, the brake control device 50 performs ratio change brake control if the flag is not set and wheel skid information is obtained at the time when a brake command is obtained. In other words, the brake control device 50 performs ratio change brake control if new wheel skid information is obtained at the time when a brake command is obtained. On the other hand, in a case where the flag is set and wheel skid information is obtained at the time when a brake command is obtained, the brake control device 50 performs ratio change brake control if at least one of (i) the condition that the railway vehicle 1 has traveled a predetermined distance or more, or (ii) the condition that a predetermined time or more has elapsed, since the control unit 54 performs the last ratio change brake control. If neither of the conditions is satisfied, the brake control device 50 performs normal brake control. Therefore, if wheel skid information is obtained at the time of obtaining the last brake command and also at the time of obtaining a new brake command, the brake control device 50 performs ratio change brake control under the condition that the railway vehicle 1 has traveled a predetermined distance or more, or a predetermined time or more has elapsed, since the last ratio change brake control is performed. In this way, the brake control device 50 can save energy because it lowers the frequency of the ratio change brake control and maintains the usage of the electric brakes 18.

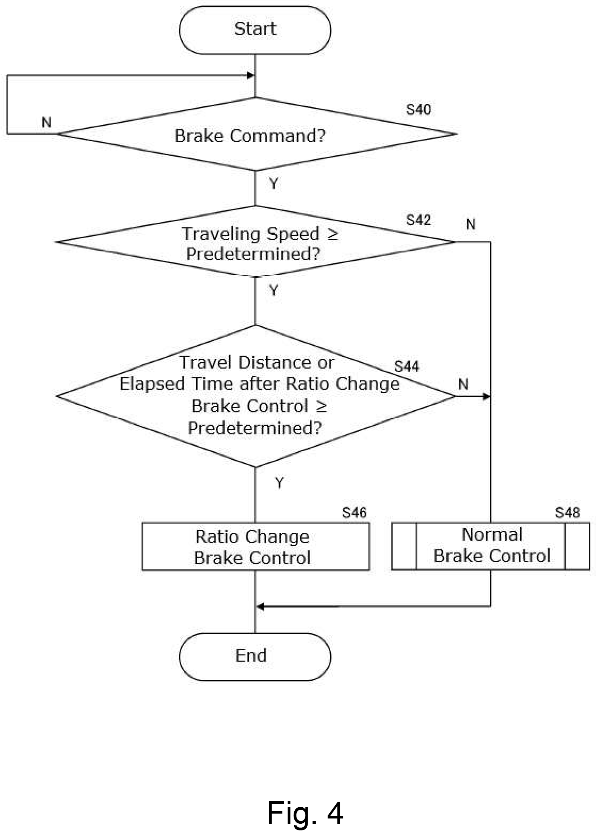

Fig. 4 is a flowchart showing a second example of the brake control performed by the brake control device 50. The process shown in Fig. 4 is performed, for example, while the railway vehicle 1 is traveling.

If the command obtaining unit 52 obtains a brake command from the cab 2 (Y in S40), the determining unit 62 determines whether the traveling speed of the railway vehicle 1 is equal to or greater than a predetermined speed (S42). If the determining unit 62 determines that the traveling speed is less than the predetermined speed (N in S42), the control unit 54 performs normal brake control (S48).

If the determining unit 62 determines in the step S42 that the traveling speed is equal to or greater than the predetermined speed (Y in S42), the determining unit 62 determines whether at least one of (i) the condition that the railway vehicle 1 has traveled the predetermined distance or more, or (ii) the condition that the predetermined time or more has elapsed, since the control unit 54 performs the last ratio change brake control, is satisfied (S44). If the determining unit 62 determines that at least one of the conditions is satisfied (Y in S44), the control unit 54 performs ratio change brake control (S46). On the other hand, if the determining unit 62 determines that neither of the conditions is satisfied (N in S44), the control unit 54 performs normal brake control (S48).

As described above, the brake control device 50 performs normal brake control if the traveling speed is less than the predetermined speed at the time when a brake command is obtained. If the traveling speed is equal to or greater than the predetermined speed at the time when a brake command is obtained, the brake control device 50 performs ratio change brake control if at least one of (i) the condition that the railway vehicle 1 has traveled the predetermined distance or more, or (ii) the condition that the predetermined time or more has elapsed, since the control unit 54 performs the last ratio change brake control, is satisfied. If neither of the conditions is satisfied, the brake control device 50 performs normal brake control. As configured this manner, the brake control device 50 can save energy because it lowers the frequency of ratio change brake control and maintains the usage of the electric brakes 18.

The brake control device 50 may perform brake control combining the first example shown in Fig. 3 and the second example shown in Fig. 4. For example, the brake control device 50 may perform the steps S42 to S48 in Fig. 4, instead of the steps S24 and S28 in Fig. 3.

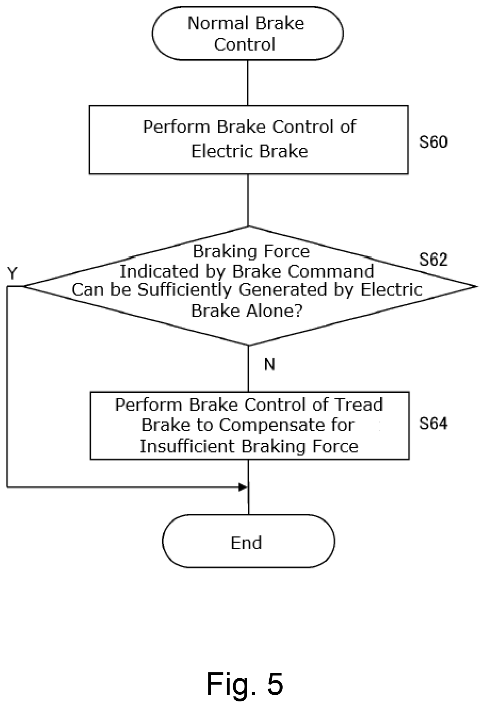

Fig. 5 is a flowchart showing an example of the normal brake control performed by the brake control device 50. The normal brake control shown in Fig. 5 is an example of the normal brake control performed in the steps S24 and S28 of Fig. 3 and the step S48 of Fig. 4 and performed after a brake command is obtained (S10 and S40).

The control unit 54 performs brake control of the electric brakes 18 (S60). The control unit 54 performs only the brake control of the electric brakes 18 if the braking force indicated by the brake command can be sufficiently generated only by performing the brake control of the electric brakes 18 (Y in S62). On the other hand, if the brake control of the electric brakes 18 alone cannot sufficiently generate the braking force indicated by the brake command (N in S62), the control unit 54 also performs the brake control of the tread brakes 16 to compensate for the insufficient braking force (S64). Thus, the brake control device 50 can save energy by prioritizing the brake control of the electric brakes 18 when performing the normal brake control.

As described above, the brake control device 50 of the present embodiment is used for the railway vehicle 1 including the tread brakes 16 and electric brakes 18. The brake control device 50 includes: the command obtaining unit 52 configured to obtain a brake command; the control unit 54 configured to perform brake control of at least one of the tread brakes 16 or the electric brakes 18 such that braking force indicated by the brake command is generated; the wheel skid information obtaining unit 58 configured to obtain wheel skid information indicating a high likelihood of the skidding of the wheels 12 of the railway vehicle 1 if the wheels 12 of the railway vehicle 1 are likely to skid; and the determining unit 62 configured to determine whether a predetermined operating condition is satisfied, the predetermined operating condition including a condition that the wheel skid information obtaining unit 58 has obtained the wheel skid information. If the determining unit 62 determines that the operating condition is satisfied at the time when the command obtaining unit 52 obtains the brake command, the control unit 54 performs ratio change brake control, in which the ratio of the braking force applied by the tread brakes 16 is increased.

With such configuration, when the railway vehicle 1 is likely to skid, the brake control device 50 performs brake control by increasing the ratio of the braking force applied by the tread brakes 16, which suppresses the progress of a mirror-like finish. As a result, the wheel skid is prevented. In addition, increasing the ratio of the braking force applied by the tread brakes 16 tends to increase the temperature of the treads of the wheels 12. This causes the water on the treads of the wheels 12 to evaporate, which prevents the wheel skid.

In the brake control device 50 relating to the present embodiment, the wheel skid information may include information related to at least one of the weather information, lubricator information, and rail information. With such configuration, the information normally available in the railway vehicle 1 can be used as the wheel skid information.

The brake control device 50 of the present embodiment is used for the railway vehicle 1 including the tread brakes 16 and electric brakes 18. The brake control device 50 includes: the command obtaining unit 52 configured to obtain a brake command; the control unit 54 configured to perform brake control of at least one of the tread brakes 16 or the electric brakes 18 such that the braking force indicated by the brake command is generated; the speed information obtaining unit 60 configured to obtain traveling speed information indicating the traveling speed of the railway vehicle 1; and the determining unit 62 configured to determine whether a predetermined operating condition is satisfied, the predetermined operating condition including a condition that the traveling speed of the railway vehicle 1 is equal to or greater than a predetermined speed. If the determining unit 62 determines that the operating condition is satisfied at the time when the command obtaining unit 52 obtains the brake command, the control unit 54 performs ratio change brake control, in which the ratio of the braking force applied by the tread brakes 16 is increased.

When the railway vehicle 1 is traveling at or above the predetermined speed, the use of the tread brakes 16 can particularly effectively roughen the treads of the wheels 12. Therefore, the brake control device 50 can effectively suppress the progress of a mirror-like finish.

In the brake control device 50 relating to the present embodiment, the operating condition may include at least one of (i) a condition that the railway vehicle 1 has traveled a predetermined distance or more, or (ii) a condition that a predetermined time or more has elapsed, since the control unit 54 performs the last ratio change brake control. In this way, the brake control device 50 can save energy because it lowers the frequency of the ratio change brake control and maintains the usage of the electric brakes 18.

Example embodiments of the present invention have been described in detail. The foregoing embodiments are all merely specific examples of how the present invention is implemented. The specific details of the embodiments do not limit the technical scope of the present invention, and many design changes, including changes, additions, and deletions of the constituent elements, can be made to the extent that they do not depart from the concept of the invention specified in the claims. Although the above embodiments describe certain features using expressions such as "of the embodiment" or "in the embodiment" to indicate that design changes are possible, it should be understood that design changes can also be allowed for features that do not include such explicit descriptions.

### [Modification Examples]

The following describes modification examples. In the description of the modification examples, the same reference numerals are used for constituent elements and members that are the same or equivalent to those in the embodiments. While omitting redundant descriptions common to the previous embodiments where appropriate, the following description will focus on configurations that are distinct from the embodiments.

According to the above-described embodiment, one brake control device 50 is provided in one railway vehicle 1. The present invention is not limited to such. For example, one brake control device 50 may be provided on each of the first and second bogies 4 and 6.

The brake control device 50 may be embodied without either the wheel skid information obtaining unit 58 or the speed information obtaining unit 60. If the brake control device 50 is embodied without the wheel skid information obtaining unit 58, the brake control device 50 need not perform the first example of the brake control shown in Fig. 3. If the brake control device 50 is embodied without the speed information obtaining unit 60, the brake control device 50 need not perform the second example of the brake control shown in Fig. 5.

The wheel skid information obtaining unit 58 may obtain wheel skid information based on information received from the information managing device 70. For example, the wheel skid information obtaining unit 58 may receive numerical information indicating the temperature, humidity or the like from the information managing device 70, determine whether the numerical information received from the information managing device 70 is equal to or less (or greater) than a predetermined threshold value, and obtain the information as the wheel skid information if it is equal to or less (or greater) than the threshold value.

The modification examples described above provide functions and advantageous effects similar to those of the embodiments.

Any combination of the embodiments and modification examples described above can also serve as embodiments of the present invention. Any new embodiment produced by a combination provides the advantageous effects of each of the original embodiments and modification examples.

## Claims

1. A railway vehicle brake control device (50) for use in a railway vehicle (1) including a tread brake (16) and an electric brake (18), the railway vehicle brake control device (50) comprising:
a command obtaining unit (52) configured to obtain a brake command;
a control unit (54) configured to perform brake control of at least one of the tread brake (16) or the electric brake (18) such that a braking force indicated by the brake command is generated;
a wheel skid information obtaining unit (58) configured to obtain wheel skid information indicating a high likelihood of wheel skid if a wheel (12) of the railway vehicle (1) is likely to skid; and
a determining unit (62) configured to determine whether a predetermined operating condition is satisfied, the predetermined operating condition including a condition that the wheel skid information obtaining unit (58) obtains the wheel skid information,
wherein, if the determining unit (62) determines that the operating condition is satisfied at a time when the command obtaining unit (52) obtains the brake command, the control unit (54) performs ratio change brake control in which a ratio of a braking force applied by the tread brake (16) is increased.

2. The railway vehicle brake control device (50) of claim 1,
wherein the wheel skid information includes information indicating a degree to which the wheel (12) is likely to skid, and
wherein, if the determining unit (62) determines that the operating condition is satisfied at the time when the command obtaining unit (52) obtains the brake command, the control unit (54) performs the ratio change brake control such that the ratio of the braking force applied by the tread brake (16) increases as the degree to which the wheel (12) is likely to skid that is indicated by the wheel skid information increases.

3. The railway vehicle brake control device (50) of claim 1, wherein the wheel skid information includes information related to at least one of weather information, lubricator information, and rail information.

4. A railway vehicle brake control device (50) for use in a railway vehicle (1) including a tread brake (16) and an electric brake (18), the railway vehicle brake control device (50) comprising:
a command obtaining unit (52) configured to obtain a brake command;
a control unit (54) configured to perform brake control of at least one of the tread brake (16) or the electric brake (18) such that a braking force indicated by the brake command is generated;
a speed information obtaining unit (60) configured to obtain traveling speed information of the railway vehicle (1); and
a determining unit (62) configured to determine whether a predetermined operating condition is satisfied, the predetermined operating condition including a condition that a traveling speed of the railway vehicle (1) is equal to or greater than a predetermined speed,
wherein, if the determining unit (62) determines that the operating condition is satisfied at a time when the command obtaining unit (52) obtains the brake command, the control unit (54) performs ratio change brake control in which a ratio of a braking force applied by the tread brake (16) is increased.

5. The railway vehicle brake control device (50) of claim 1 or 4, wherein the operating condition includes at least one of (i) a condition that the railway vehicle (1) has traveled a predetermined distance or more, or (ii) a condition that a predetermined time or more has elapsed, since the control unit (54) performs the ratio change brake control.

6. The railway vehicle brake control device (50) of claim 1 or 4, wherein the control unit (54) performs brake control of the tread brake (16) only if the determining unit (62) determines that the operating condition is satisfied at the time when the command obtaining unit (52) obtains the brake command.

7. A railway vehicle brake control method for controlling a computer used in a railway vehicle (1) including a tread brake (16) and an electric brake (18), the railway vehicle brake control method comprising:
a command obtaining step of obtaining a brake command;
a control step of performing brake control of at least one of the tread brake (16) or the electric brake (18) such that a braking force indicated by the brake command is generated;
a wheel skid information obtaining step of obtaining wheel skid information indicating a high likelihood of wheel skid if a wheel (12) of the railway vehicle (1) is likely to skid; and
a determining step of determining whether a predetermined operating condition is satisfied, the predetermined operating condition including a condition that the wheel skid information is obtained,
wherein the control step is a step of, if the operating condition is determined in the determining step to be satisfied at a time when the brake command is obtained in the command obtaining step, performing ratio change brake control in which a ratio of a braking force applied by the tread brake (16) is increased.

8. A railway vehicle brake control method for controlling a computer used in a railway vehicle (1) including a tread brake (16) and an electric brake (18), the railway vehicle brake control method comprising:
a command obtaining step of obtaining a brake command;
a control step of performing brake control of at least one of the tread brake (16) or the electric brake (18) such that a braking force indicated by the brake command is generated;
a speed information obtaining step of obtaining traveling speed information of the railway vehicle (1); and
a determining step of determining whether a predetermined operating condition is satisfied, the predetermined operating condition including a condition that a traveling speed of the railway vehicle (1) is equal to or greater than a predetermined speed,
wherein the control step is a step of, if the operating condition is determined in the determining step to be satisfied at a time when the brake command is obtained in the command obtaining step, performing ratio change brake control in which a ratio of a braking force applied by the tread brake (16) is increased.

9. A railway vehicle brake control program to be executed by a computer used in a railway vehicle (1) including a tread brake (16) and an electric brake (18), the railway vehicle brake control program causing the computer to perform:
a command obtaining step of obtaining a brake command;
a control step of performing brake control of at least one of the tread brake (16) or the electric brake (18) such that a braking force indicated by the brake command is generated;
a wheel skid information obtaining step of obtaining wheel skid information indicating a high likelihood of wheel skid if a wheel (12) of the railway vehicle (1) is likely to skid; and
a determining step of determining whether a predetermined operating condition is satisfied, the predetermined operating condition including a condition that the wheel skid information is obtained,
wherein the control step is a step of, if the operating condition is determined in the determining step to be satisfied at a time when the brake command is obtained in the command obtaining step, performing ratio change brake control in which a ratio of a braking force applied by the tread brake (16) is increased.

10. A railway vehicle brake control program to be executed by a computer used in a railway vehicle (1) including a tread brake (16) and an electric brake (18), the railway vehicle brake control program causing the computer to perform:
a command obtaining step of obtaining a brake command;
a control step of performing brake control of at least one of the tread brake (16) or the electric brake (18) such that a braking force indicated by the brake command is generated;
a speed information obtaining step of obtaining traveling speed information of the railway vehicle (1); and
a determining step of determining whether a predetermined operating condition is satisfied, the predetermined operating condition including a condition that a traveling speed of the railway vehicle (1) is equal to or greater than a predetermined speed,
wherein the control step is a step of, if the operating condition is determined in the determining step to be satisfied at a time when the brake command is obtained in the command obtaining step, performing ratio change brake control in which a ratio of a braking force applied by the tread brake (16) is increased.
